# EUROPEAN PATENT SPECIFICATION

(11) **EP 3 187 381 B1**
(45) Date of publication and mention of the grant of the patent: **03.04.2019**
(21) Application number: 16207051.0
(22) Date of filing: 28.12.2016
(51) Int. Cl.: B60R 21/36, B60R 21/0134

(54) **PEDESTRIAN AND VEHICLE PROTECTION SYSTEM**
FUSSGÄNGER- UND FAHRZEUGSCHUTZSYSTEM
SYSTÈME DE PROTECTION DE VÉHICULE ET DE PIÉTON

(30) Priority: 29.12.2015 US 201514981963
(43) Date of publication of application: 05.07.2017
(73) Proprietor: Thunder Power New Energy Vehicle Development Company Limited, Central, Hong Kong (CN)
(72) Inventor: Tai-Te, Wu, Taoyuan City, Taiwan (CN)
(74) Representative: Sadler, Peter Frederick

(56) References cited:
- EP-A1- 3 187 378
- DE-A1- 10 203 287
- US-A- 5 959 552
- US-A1- 2002 093 180
- US-A1- 2006 043 712
- US-A1- 2009 267 366

## Description

### BACKGROUND OF THE INVENTION

This section is intended to introduce the reader to various aspects of art that may be related to various aspects of the present invention, which are described and/or claimed below. This discussion is believed to be helpful in providing the reader with background information to facilitate a better understanding of the various aspects of the present invention. Accordingly, it should be understood that these statements are to be read in this light, and not as admissions of prior art.

Some vehicles may include one or more safety systems for protecting vehicle occupants. For example, a vehicle may include seatbelts that restrain movement of a vehicle while braking and/or during a collision. Some vehicles may also include airbag systems that cushion a vehicle occupant during an accident. For example, during an accident internal airbags may deploy to cushion and/or block contact between the vehicle occupants and portions of the vehicle.

US patent US 5959552 describes a system for minimizing roadway vehicle damage and personal injury which includes a detection sensor unit, a computer processing unit (CPU), and energy absorbing inflation devices. The detection sensor unit, which is mounted on the roadway vehicle to detect the speed, distance and direction of a potential obstacle, includes a transmitter for transmitting signals and a directional receiver to receive signals reflected by the potential obstacle and generates an electronic signal in response thereto. The CPU, which receives information on the speed and direction of the roadway vehicle and receives signals from the detection sensor unit continuously processes the information and signals and calculates changes in the speed, distance and direction of the potential obstacle with respect to the roadway vehicle. The CPU generates a control signal upon calculation of an imminent collision situation, which calculation is based on a predetermined minimum allowable time window. The minimum allowable time window is generally defined as a time period during which a driver of the roadway vehicle is unable to take evasive action, such as braking or turning the steering wheel, to avoid a collision situation. Each of the energy absorbing inflation devices includes an electronically controlled valve, with at least one of the energy absorbing inflation devices being responsive to the control signal. An external air bag is coupled to the valve of one of the energy absorbing inflation devices and an internal air bag is coupled to the valve of another of the inflation devices, such that upon calculation by the CPU of the imminent collision situation based on the predetermined minimum allowable time window, the CPU transmits the control signal to one of the energy absorbing inflation devices to deploy the air bags prior to the time of actual collision.

### BRIEF SUMMARY OF THE INVENTION

The present disclosure is directed to a pedestrian protection system that includes a first sensor that generates a first signal indicating a first hazard condition on a first side of a vehicle. The pedestrian protection system may also include an external airbag system that deploys an external airbag outside of the vehicle. In operation, a processor receives the first signal from the first sensor, processes the first signal to detect the first hazard condition, and activates the external airbag system in response to the detected first hazard condition to protect at least one of a pedestrian and the vehicle. The first hazard condition is that an object is in the vehicle tire's path of movement or that an object may enter the vehicle tire's path of movement. The external airbag system is activated to deploy an external airbag to block and or move the object out of the tire's path of movement.

Another aspect of the disclosure includes a method for deploying a pedestrian protection system. The method begins by receiving a first signal from a first sensor, the first signal indicating a first hazard condition. The method then detects the first hazard condition in response to the first signal. After detecting the hazard condition, the method activates an external airbag system in response to the detected first hazard condition. Finally, the method deploys a first airbag to protect at least one of a pedestrian and a vehicle. The first hazard condition is that an object is in the vehicle tire's path of movement or that an object may enter the vehicle tire's path of movement. The external airbag system is activated to deploy a first airbag to block and or move the object out of the tire's path of movement.

### BRIEF DESCRIPTION OF THE DRAWINGS

Various features, aspects, and advantages of the present invention will be better understood when the following detailed description is read with reference to the accompanying figures in which like characters represent like parts throughout the figures, wherein:
FIG. 1 is a top view of an embodiment of a vehicle with a pedestrian and vehicle protection system;
FIG. 2 is a side view of an embodiment of a vehicle with a pedestrian and vehicle protection system;
FIG. 3 is a rear view of an embodiment of a vehicle with a pedestrian and vehicle protection system; and
FIG. 4 is a flow chart of an embodiment of a method illustrating operation of a pedestrian and vehicle protection system.

### DETAILED DESCRIPTION OF THE INVENTION

One or more specific embodiments of the present invention will be described below. These embodiments are only exemplary of the present invention. Additionally, in an effort to provide a concise description of these exemplary embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The embodiments disclosed below include a pedestrian and vehicle protection system that deploys external airbags to block and/or cushion contact between a vehicle carrying the external airbags and pedestrians, animals, other vehicles, and/or stationary objects (e.g., wall, vehicles). By cushioning and/or blocking contact, the airbags may block or limit damage to the vehicle, pedestrians, animals, other vehicles, etc. As will explained below, the pedestrian and vehicle protection system may include multiple airbags that are positioned on one or more sides of the vehicle (e.g., front, rear, sides). In operation, the pedestrian and vehicle protection system determines when the airbags deploy by using a controller that connects to one or more sensors. The controller uses feedback from the sensors to detect a hazard condition (e.g., possible or likely contact between the vehicle and another object) and in response to the detected hazard condition activates one or more airbags. In some embodiments, the pedestrian and vehicle protection system may determine whether an object is in a tire's path of movement (e.g., pedestrian foot) or if there will likely be an object in the tire's path of movement. If so, then the pedestrian and vehicle protection system activates one or more airbags to block and/or move the object out of the tire's path of movement.

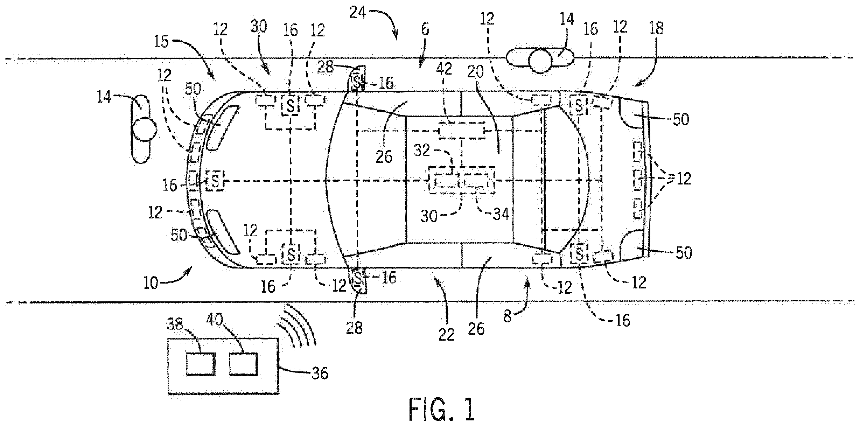

FIG. 1 is a top view of an embodiment of a vehicle 6 with a pedestrian and vehicle protection system 8. The pedestrian and vehicle protection system 8 includes an external airbag system 10 that deploys airbags 12 outside of the vehicle 6 that may protect pedestrians 14 (e.g., people, animals) as well as the vehicle 6 from injury and/or damage. For example, if a pedestrian steps in front of the vehicle 6, the pedestrian and vehicle protection system 8 may deploy one or more of the airbags 12 positioned at the front 15 of the vehicle 6 to cushion the impact between the pedestrian 14 and the vehicle 6. By cushioning the impact, the airbag 12 may block or reduce injury to the pedestrian 14 as well as possible damage to the vehicle 6. While FIG. 1 illustrates a car as the vehicle 6, the vehicle 6 may be any number of other vehicles (e.g., car, truck, motorcycle, etc.).

The pedestrian and vehicle protection system 8 includes a variety of components that operate together in order to determine a hazard condition (e.g., approaching vehicle, approaching stationary structure, approaching pedestrian) and then activates the external airbag system 10 in response to the detected hazard condition. These components may include a variety of collision sensors 16 placed at different locations on the vehicle 6. For example, the collision sensors 16 may couple to the front 15 of the vehicle 6; the back 18 of the vehicle 6; on top 20 of the vehicle 6; and sides 22, 24 of the vehicle 6 (e.g., doors 26, side mirrors 28). In this way, the pedestrian and vehicle protection system 8 may enable 360-degree hazard detection. However, in some embodiments the vehicle 6 may only have collision sensors 16 that enable hazard detection from one direction (e.g., hazards approaching the rear 18 of the vehicle 6).

The collision sensors 16 may include optical cameras, infrared cameras, motion detectors, radar, lasers, ultrasonic sensors, and/or any other sensor(s). In some embodiments, the pedestrian and vehicle protection system 8 may include sensor packages that include one or more collision sensors 16 (e.g., optical cameras, infrared cameras, motion detectors, radar, lasers, ultrasonic sensors, etc.). By including a variety of collision sensors 16, the pedestrian and vehicle protection system 8 may provide redundant detection of hazards 12 in different environmental conditions. For example, during daylight hours, the optical camera may enable hazard detection, but at night or in low light conditions the optical camera may not be able to identify hazards. In these situations, another collision sensor 16, such as an infrared camera or radar, may then provide hazard detection. In other words, when the capability of one collision sensor 16 is degraded another collision sensor 16 may still detect hazards. Accordingly, the pedestrian and vehicle protection system 8 may provide continuous or near continuous hazard detection in a variety of conditions such as rain, low light, snow, fog, sand/dust storms, among others.

In operation, the collision sensors 16 transmit signals (e.g., wirelessly, through wired connections) to a controller 30 (e.g., computer). The controller 30 may include one or more processors 32 that execute instructions stored on one or more memories 34 to process the signals (e.g., data) from the collision sensors 16. For example, the controller 30 may receive a signal (e.g., data) from an optical camera. The processor 32 may then execute a program stored on the memory 34 that recognizes objects (e.g., cars, trucks, bicycles, pedestrians, animals, stationary objects, etc.) in images taken by the optical camera. If the processor 32 detects a hazard, the processor 32 executes instructions to activate the external airbag system 10. For example, the controller 30 may detect a hazard in less than 0.1, 0.3, 0.5, 1.0, 1.5 seconds, etc. In some embodiments, the controller 30 may continuously receive feedback from the collision sensor 16 enabling the controller 30 to track changes of the potential hazard and determine if the changes alter the hazard condition (e.g., increase the risk of collision, reduce the risk of collision, or remove the risk of collision). These changes may include changes in the speed of the hazard; changes in the distance between the hazard and the vehicle 6; changes in the direction of travel of the hazard; etc. For example, threshold distances, threshold speeds, etc. may be stored in the memory 34 and accessed by the processor 32 to determine whether a hazard condition exists. Furthermore, in some embodiments, the controller 30 may simultaneously receive feedback from multiple collision sensors 16 (e.g., collisions sensors 16 with the same or overlapping coverage) enabling the controller 30 to more accurately identify a hazard (e.g., cross-reference, verify) and determine if a hazard condition or situation exists.

In some embodiments, the pedestrian and vehicle protection system 8 may connect to a remote server 36 that processes the signals from the collision sensors 16. Indeed, instead of including processor(s) 32 on the vehicle 6 that are capable of processing the feedback from the collision sensors 16, a remote server 36 with one or more processors 38 may process signals from the collision sensors 16 using instructions (e.g., programs) stored on one or more memories 40. For example, the pedestrian and vehicle protection system 8 may include a transmitter/receiver 42 that receives signals either directly from the collision sensors 16 or receives the signals through the controller 30. The transmitter/receiver 42 then transmits the sensor signals (e.g., through cellular networks, wireless networks, etc.) to the server 36, which then processes the signals and identifies whether a hazard condition exists. If the server 36 identifies a hazard condition after processing signals from the collision sensors 16, then the server 36 transmits a signal to the controller 30 to activate the airbags 12. In some embodiments, the controller 30 and the server 36 may redundantly process signals from the collision sensors 16, or the server 36 may only process feedback from the collision sensor 16 if the controller 30 is unable to do so.

As illustrated, the vehicle protection system 8 may include one or more airbags 12 on the front 15, back 18, and/or sides 22, 24 of the vehicle 6 (e.g., 1, 2, 3, 4, 5, or more). In embodiments with multiple airbags 12, the pedestrian and vehicle protection system 8 may control/activate some or all of the airbags 12 on a particle side of the vehicle 6. For example, if pedestrian and vehicle protection system 8 determines that the hazard will impact only a portion of the front 15 of the vehicle 6, the pedestrian and vehicle protection system 8 may deploy a subset of the total number of airbags on the front 15. In other words, the pedestrian and vehicle protection system 8 may activate the airbags that will or will most likely contact the hazard, instead of all of the airbags 12 on a particular side of the vehicle 6.

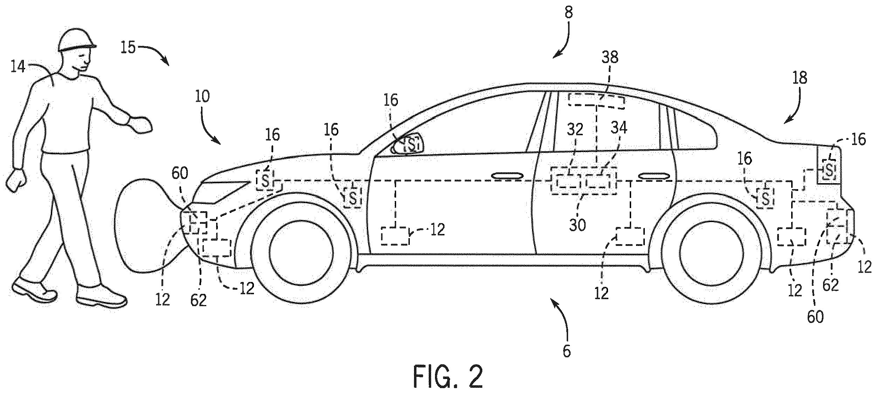

FIG. 2 is a side view of an embodiment of a vehicle 6 with a pedestrian and vehicle protection system 8. As explained above, the pedestrian and vehicle protection system 8 uses signals from collision sensors 16 to determine if a hazard condition exists. If a hazard condition exists, the pedestrian and vehicle protection system 8 deploys an airbag 12 from the external airbag system 10. In order to deploy an airbag 12, the external airbag system 10 includes an inflator 60. In some embodiments, the inflator 60 may be chemicals (e.g., sodium azide (NaN3) and potassium nitrate (KNO3)) and an ignitor that ignites the chemicals in response to a signal from the controller 30. Once ignited, the chemicals may rapidly turn into a gas, which inflates the airbag 12. In some embodiments, the inflator 60 may be compressed air stored in a container on the vehicle 6. In operation, a valve may release the compressed air in response to a signal from the controller 30, which then inflates the airbag(s) 12.

As illustrated, once deployed the airbag 12 may cushion an impact between the vehicle 6 and a pedestrian 14, another vehicle (e.g., car, bicycle, motorcycle, moped, truck), a stationary object (e.g., wall, vehicle), etc. In this way, the pedestrian and vehicle protection system 8 may block or reduce damage or injury to the vehicle 6 and whatever the vehicle 6 impacts or that impacts the vehicle 6. For example, the vehicle 6 may be not moving, but the pedestrian and vehicle protection system 8 may detect an approaching hazard that could possible damage the vehicle 6. In this situation, the vehicle 6 may deploy the airbag 12 to protect the vehicle 6 from the approaching hazard.

In some embodiments, the external airbag system 10 may include a retraction system 62. After the airbag 12 deploys the retraction system 62 may retract the airbag 12 either for storage or for immediate reuse. For example, the retraction system 62 may include a pump that removes the gas from the airbag enabling the airbag 12 to contract and withdraw into the vehicle 6. In some embodiments, the retraction system 62 may include a mechanical actuator that pulls the deployed airbag 12 back into the vehicle 6 after releasing the gas.

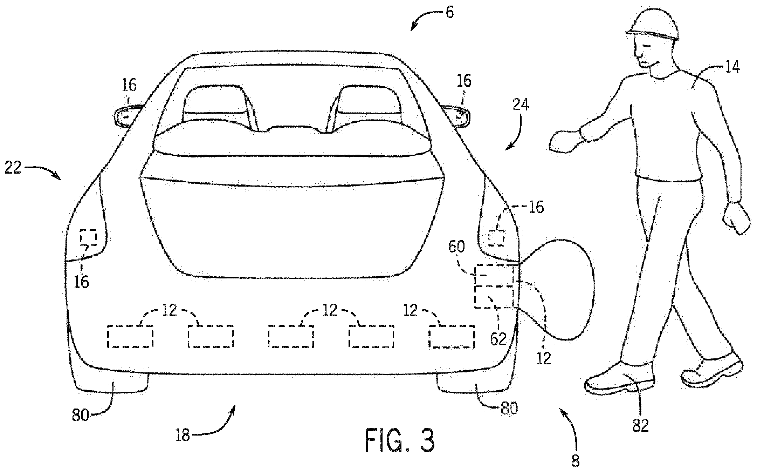

FIG. 3 is a side view of an embodiment of vehicle 6 with a pedestrian and vehicle protection system 8. As explained above, the pedestrian and vehicle protection system 8 uses signals from collision sensors 16 to determine if a hazard condition exists. If a hazard condition exists, the pedestrian and vehicle protection system 8 deploys an airbag 12 from the external airbag system 10. Once deployed, the airbag 12 may cushion an impact between the vehicle 6 and a pedestrian 14, another vehicle (e.g., car, bicycle, motorcycle, moped, truck), a stationary object (e.g., wall, vehicle), etc. In this way, the pedestrian and vehicle protection system 8 may block or reduce damage or injury to the vehicle 6 and whatever the vehicle 6 impacts or that impacts the vehicle 6. For example, the vehicle 6 may be not moving, but the pedestrian and vehicle 6. In this situation, the vehicle 6 may deploy the airbag 12 to protect the vehicle 6 from the approaching hazard.

According to the invention, the pedestrian and vehicle protection system 8 is used to push a potential hazard away from a tire 80 or block movement of an object from entering a tire's path of movement. In other words, the pedestrian and vehicle protection system 8 uses collision sensors 16 to recognize that an object may be in a tire's path of movement and then deploys one or more airbags 12 to move the object out of the path of movement (e.g., a foot). The pedestrian and vehicle protection system 8 also deploys an airbag 12 when the pedestrian and vehicle protection system 8 detects that an object may enter the tire's path of movement. For example, pedestrian and vehicle protection system 8 may deploy an airbag 12 to block a pedestrian's foot 82 from entering a tire's path of movement.

As illustrated, in FIGS. 1 and 2 the pedestrian and vehicle protection system 8 may include one or more airbags 12 on the sides 22, 24 of the vehicle 6 (e.g., 1, 2, 3, 4, 5, or more). For example, the pedestrian and vehicle protection system 8 may include an airbag 12 on opposite sides of each tire 80 (e.g., wheel well). In some embodiments, the pedestrian and vehicle protection system 8 may activate one or more of the airbags 12 on the sides 22, 24 depending on the direction of travel and/or where a hazard may contact the vehicle 6. For example, if an object is in front of or could possible get in front of a tire 80, and the vehicle's direction of travel is in a forward direction, the pedestrian and vehicle protection system 8 will activate the airbag in front of the tire 80 to move and/or block the object from remaining and/or entering in front of the tire 80. Likewise, if the vehicle's direction of travel is in reverse, the pedestrian and vehicle protection system 8 may activate the airbag 12 behind the tire 80 to move and/or block the object from remaining and/or entering behind the tire 80. In other words, the pedestrian and vehicle protection system 8 may activate the airbags 12 that will or will most likely contact the hazard, instead of activating all of the airbags 12 on a particular side (e.g., sides 22, 24) of the vehicle 6.

As explained above, the external airbag system 10 may include a retraction system 62. After the airbag 12 deploys the retraction system 62 may retract the airbag 12 either for storage and later resetting (e.g., replacement of chemicals), or for immediate reuse. For example, the retraction system 62 may include a pump that removes the gas from the airbag enabling the airbag 12 to contract and withdraw into the vehicle 6. In some embodiments, the retraction system 62 may include a mechanical actuator that pulls the deployed airbag 12 into the vehicle 6 after releasing the gas.

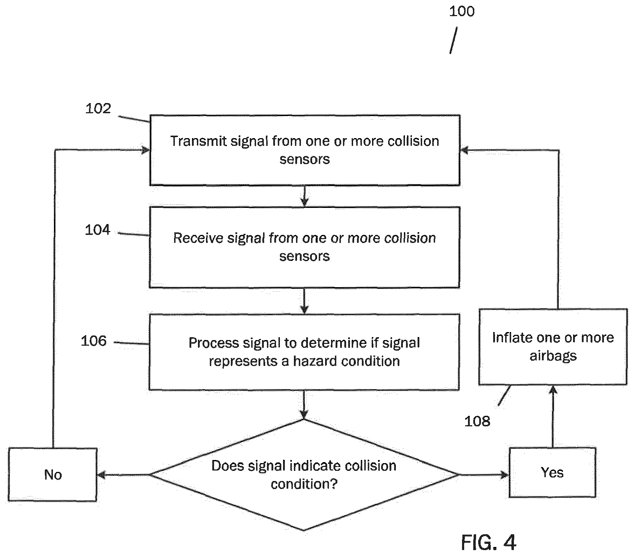

FIG. 4 is a flow chart 100 of an embodiment of a method of operation of the pedestrian and vehicle protection system 8. In some embodiments, operation of the pedestrian and vehicle protection system 8 starts by transmitting signal(s) from one or more collision sensors 16 (step 102). The controller 30 and/or the server 36 then receive the signal(s) from the one or more collision sensors (step 104). After receiving the signals, the controller 30 and/or server 36 processes the signals using one or more programs stored in the memories 34 to determine if there is a hazard condition (e.g., whether nearby traffic is likely to contact the vehicle 6 and/or if the vehicle is likely to contact a stationary object) (step 106). In some embodiments, processing the signals from the collision sensors 16 may include determining whether the vehicle is moving forwards or backwards. As explained above, the pedestrian and vehicle protection system 8 may deploy some and not all of the airbags on the sides 22, 24 of the vehicle 6 depending on the location of the hazard (e.g., whether a pedestrian's foot in the tire's path of movement) and the direction of vehicle travel. If no hazard condition exists then the collision sensors 16 may continue to transmit signals from the collision sensors 16 to the controller 30 and/or server for monitoring. If the controller 30 and/or server 36 detect a hazard condition then the controller 30 inflates one or more airbags 12 (step 108).

## Claims

1. A pedestrian and vehicle protection system, comprising:
a first sensor (16) configured to generate a first signal indicating a first hazard condition on a first side of a vehicle (6);
an external airbag system (10) configured to deploy an external airbag (12) outside of the vehicle; and
a processor (32) configured to receive the first signal from the first sensor, process the first signal to detect the first hazard condition, and activate the external airbag system in response to the detected first hazard condition to protect at least one of a pedestrian and the vehicle.
**characterized in that**:
the first hazard condition is that an object is in the vehicle tire's path of movement or that an object may enter the vehicle tire's path of movement; and.
the external airbag system is activated to deploy the external airbag to block and/or move the object out of the tire's path of movement.

2. The system of claim 1, wherein the first sensor is at least one of an optical camera, infrared camera, motion detector, radar, laser, and ultrasonic sensor.

3. The system of any preceding claim, wherein the external airbag system includes a first airbag coupled to the first side of the vehicle.

4. The system of claim 3, wherein the external airbag system includes a first retraction system that retracts a deployed first airbag for reuse.

5. The system of any preceding claim, comprising a second sensor configured to generate a second signal indicating a second hazard condition on a second side of the vehicle.

6. The system of claim 5, wherein the processor is configured to receive the second signal from the second sensor, process the second signal to detect the second hazard condition, and activate the external airbag system in response to the detected second hazard condition.

7. The system of claim 5 or 6, wherein the second sensor is at least one of an optical camera, infrared camera, motion detector, radar, laser, and ultrasonic sensor.

8. The system of claim 3, or any of claims 4 to 7 when dependent upon claim 3, wherein the external airbag system includes a second airbag coupled to the second side of the vehicle.

9. A method for deploying a pedestrian and vehicle protection system, comprising:
receiving (104) a first signal from a first sensor, the first signal indicating a first hazard condition;
detecting (106) the first hazard condition in response to the first signal; and
activating an external airbag system in response to the detected first hazard condition; and
deploying (108) a first airbag to protect at least one of a pedestrian and a vehicle.
**characterized in that**:
the first hazard condition is that an object is in the vehicle tire's path of movement or that an object may enter the vehicle tire's path of movement; and
the external airbag system is activated to deploy a first airbag to block and or move the object out of the tire's path of movement.

10. The method of claim 9, wherein the first hazard condition is on a first side of the vehicle.

11. The method of claim 9 or 10, comprising receiving a second signal from a second sensor, the second signal indicating a second hazard condition.

12. The method of claim 10, or claim 11 when dependent upon claim 10, further comprising detecting the second hazard condition in response to the second signal.

13. The method of claim 11, or claim 12 when dependent upon claim 11, further comprising activating the external airbag system in response to the detected second hazard condition to deploy a second airbag.

14. The method of claim 12, or claim 13 when dependent upon claim 12, wherein the second traffic condition and the second hazard condition are on a second side of the vehicle.

15. A computer program comprising instructions that when executed on a computer system on board a vehicle causes it to carry out the method of any of claims 9 to 14.

## Patentansprüche

1. Fußgänger- und Fahrzeugschutzsystem, umfassend:
einen ersten Sensor (16), der konfiguriert ist, um ein erstes Signal zu erzeugen, das einen ersten Gefahrenzustand auf einer ersten Seite eines Fahrzeugs (6) anzeigt;
ein Außenairbagsystem (10), das zum Auslösen eines Außenairbags (12) außerhalb des Fahrzeugs konfiguriert ist; und
einen Prozessor (32), der so konfiguriert ist, dass er das erste Signal von dem ersten Sensor empfängt, das erste Signal verarbeitet, um den ersten Gefahrenzustand zu erfassen, und das Außenairbagsystem als Reaktion auf den erkannten ersten Gefahrenzustand aktiviert, um einen Fußgänger und/oder das Fahrzeug zu schützen,
**dadurch gekennzeichnet, dass**
der erste Gefahrenzustand darin besteht, dass sich ein Objekt in dem Bewegungsweg des Fahrzeugreifens befindet oder dass ein Objekt in den Bewegungsweg des Fahrzeugreifens eintreten kann; und
das Außenairbagsystem aktiviert wird, um den Außenairbag auszulösen, um das Objekt aus dem Bewegungsweg des Reifens auszusperren und/oder zu bewegen.

2. System nach Anspruch 1, wobei der erste Sensor mindestens eine(n) aus einer optischen Kamera, Infrarotkamera, Bewegungsmelder, Radar-, Laser- und Ultraschallsensor umfasst.

3. System nach einem der vorhergehenden Ansprüche, wobei das Außenairbagsystem einen ersten Airbag umfasst, der mit der ersten Seite des Fahrzeugs gekoppelt ist.

4. System nach Anspruch 3, wobei das Außenairbagsystem ein erstes Rückzugssystem umfasst, das einen ausgelösten ersten Airbag zur Wiederverwendung zurückzieht.

5. System nach einem der vorhergehenden Ansprüche, umfassend einen zweiten Sensor, der konfiguriert ist, um ein zweites Signal zu erzeugen, das einen zweiten Gefahrenzustand auf einer zweiten Seite des Fahrzeugs anzeigt.

6. System nach Anspruch 5, wobei der Prozessor konfiguriert ist, um das zweite Signal von dem zweiten Sensor zu empfangen, das zweite Signal zu verarbeiten, um den zweiten Gefahrenzustand zu erfassen, und das Außenairbagsystem in Reaktion auf den zweiten erkannten Gefahrenzustand zu aktivieren.

7. System nach Anspruch 5 oder 6, wobei der zweite Sensor zumindest eine(n) aus einem/einer optischen Kamera, Infrarotkamera, Bewegungsmelder, Radar-, Laser- und Ultraschallsensor umfasst.

8. System nach Anspruch 3 oder nach einem der Ansprüche 4 bis 7, wenn abhängig von Anspruch 3, wobei das Außenairbagsystem einen zweiten Airbag, der an der zweiten Seite des Fahrzeugs gekoppelt ist, umfasst.

9. Verfahren zum Auslösen eines Fußgänger- und Fahrzeugschutzsystems, umfassend:
Empfangen (104) eines ersten Signals von einem ersten Sensor, wobei das erste Signal einen ersten Gefahrenzustand anzeigt;
Erkennen (106) des ersten Gefahrenzustands als Reaktion auf das erste Signal; und Aktivieren eines Außenairbagsystems als Reaktion auf den erfassten ersten Gefahrenzustand; und
Auslösen (108) eines ersten Airbags, um einen Fußgänger und/oder ein Fahrzeug zu schützen.
**dadurch gekennzeichnet, dass**
der erste Gefahrenzustand darin besteht, dass sich ein Objekt in dem Bewegungsweg des Fahrzeugreifens befindet oder dass ein Objekt in den Bewegungsweg des Fahrzeugreifens eintreten kann; und
das Außenairbagsystem aktiviert wird, um einen ersten Airbag auszulösen, um das Objekt aus dem Bewegungsweg des Reifens auszusperren und/oder zu bewegen.

10. Verfahren nach Anspruch 9, wobei der erste Gefahrenzustand auf einer ersten Seite des Fahrzeugs ist.

11. Verfahren nach Anspruch 9 oder 10, umfassend das Empfangen eines zweiten Signals von einem zweiten Sensor, wobei das zweite Signal einen zweiten Gefahrenzustand anzeigt.

12. Verfahren nach Anspruch 10 oder Anspruch 11, wenn abhängig von Anspruch 10, ferner umfassend das Erkennen des zweiten Gefahrenzustands als Reaktion auf das zweite Signal.

13. Verfahren nach Anspruch 11 oder Anspruch 12, wenn abhängig von Anspruch 11, ferner umfassend das Aktivieren des Außenairbagsystems als Reaktion auf den erkannten zweiten Gefahrenzustand, um einen zweiten Airbag auszulösen.

14. Verfahren nach Anspruch 12 oder Anspruch 13, wenn abhängig von Anspruch 12, wobei der zweite Verkehrszustand und der zweite Gefahrenzustand auf einer zweiten Seite des Fahrzeugs sind.

15. Computerprogramm mit Anweisungen, die bei ihrer Ausführung auf einem Computersystem an Bord eines Fahrzeugs bewirken, dass das Verfahren nach einem der Ansprüche 9 bis 14 ausgeführt wird.

## Revendications

1. Système de protection de piétons et de véhicules, comprenant :
un premier capteur (16), conçu pour générer un premier signal indiquant une première situation dangereuse sur un premier côté d'un véhicule (6) ;
un système de coussin de sécurité gonflable externe (10), conçu pour déployer un coussin de sécurité gonflable externe (12) à l'extérieur du véhicule ; et
un processeur (32), configuré pour recevoir le premier signal provenant du premier capteur, pour traiter le premier signal afin de détecter la première situation dangereuse et pour activer le système de coussin de sécurité gonflable externe en réponse à la première situation dangereuse détectée, afin de protéger un piéton et/ou le véhicule.
**caractérisé en ce que** :
la première situation dangereuse est qu'un objet se situe dans la trajectoire du pneu du véhicule ou qu'un objet peut entrer dans la trajectoire du pneu du véhicule ; et
le système de coussin de sécurité gonflable externe est activé pour déployer le coussin de sécurité gonflable externe afin de faire obstruction à l'objet et/ou de sortir l'objet de la trajectoire du pneu.

2. Système selon la revendication 1, dans lequel le premier capteur est au moins un élément parmi une caméra optique, une caméra infrarouge, un détecteur de mouvement, un radar, un laser et un capteur à ultrasons.

3. Système selon l'une quelconque des revendications précédentes, dans lequel le système de coussin de sécurité gonflable externe comprend un premier coussin de sécurité gonflable accouplé au premier côté du véhicule.

4. Système selon la revendication 3, dans lequel le système de coussin de sécurité gonflable externe comprend un premier système de rétraction qui rétracte un premier coussin de sécurité gonflable déployé à réutiliser.

5. Système selon l'une quelconque des revendications précédentes, comprenant un second capteur conçu pour générer un second signal indiquant une seconde situation dangereuse sur un second côté du véhicule.

6. Système selon la revendication 5, dans lequel le processeur est conçu pour recevoir le second signal provenant du second capteur, pour traiter le second signal afin de détecter la seconde situation dangereuse et pour activer le système de coussin de sécurité gonflable externe, en réponse à la seconde situation dangereuse détectée.

7. Système selon la revendication 5 ou 6, dans lequel le second capteur est au moins un élément parmi une caméra optique, une caméra infrarouge, un détecteur de mouvement, un radar, un laser et un capteur à ultrasons.

8. Système selon la revendication 3, ou l'une quelconque des revendications 4 à 7 lorsqu'elle est subordonnée à la revendication 3, dans lequel le système de coussin de sécurité gonflable externe comprend un second coussin de sécurité gonflable, accouplé au second côté du véhicule.

9. Procédé de déploiement d'un système de protection de piéton et de véhicule, comprenant :
la réception (104) d'un premier signal provenant d'un premier capteur, le premier signal indiquant une première situation dangereuse ;
la détection (106) de la première situation dangereuse en réponse au premier signal ; et
l'activation d'un système de coussin de sécurité gonflable externe en réponse à la première situation dangereuse détectée ; et
le déploiement (108) d'un premier coussin de sécurité gonflable pour protéger un piéton et/ou un véhicule.
**caractérisé en ce que** :
la première situation dangereuse est qu'un objet se situe dans la trajectoire du pneu du véhicule ou qu'un objet peut entrer dans la trajectoire du pneu du véhicule ; et
le système de coussin de sécurité gonflable externe est activé pour déployer un premier coussin de sécurité gonflable afin de faire obstruction à l'objet et/ou de sortir l'objet de la trajectoire du pneu.

10. Procédé selon la revendication 9, dans lequel la première situation dangereuse est détectée sur un premier côté du véhicule.

11. Procédé selon la revendication 9 ou 10, comprenant la réception d'un second signal provenant d'un second capteur, le second signal indiquant une seconde situation dangereuse.

12. Procédé selon la revendication 10, ou la revendication 11 lorsqu'elle est subordonnée à la revendication 10, comprenant en outre la détection de la seconde situation dangereuse en réponse au second signal.

13. Procédé selon la revendication 11, ou la revendication 12 lorsqu'elle est subordonnée à la revendication 11, comprenant en outre l'activation du système de coussin de sécurité gonflable externe en réponse à la seconde situation dangereuse détectée pour déployer un second coussin de sécurité gonflable.

14. Procédé selon la revendication 12, ou la revendication 13 lorsqu'elle est subordonnée à la revendication 12, dans lequel le second état de la circulation et la seconde situation dangereuse sont détectés sur un second côté du véhicule.

15. Programme informatique comprenant des instructions qui, lorsqu'elles sont exécutées sur un système informatique embarqué dans un véhicule, entraînent l'exécution par le programme informatique du procédé selon l'une quelconque des revendications 9 à 14.
